# EUROPÄISCHE PATENTANMELDUNG

(11) **EP 1 134 000 A2**
(43) Veröffentlichungstag der Anmeldung: **19.09.2001**
(21) Anmeldenummer: 01710013.2
(22) Anmeldetag: 16.03.2001
(51) Int. Cl.: A61M 1/02, A23L 3/36

(54) **Vorrichtung zum Schockgefrieren von Blutplasma oder Lebensmitteln**

(30) Priorität: 16.03.2000 DE 20005150 U; 19.04.2000 DE 20007419 U
(71) Anmelder: TuS Spezialkühlanlagen und Vertrieb GmbH, 01809 Heidenau (DE)
(72) Erfinder: Tumpach, Wolfgang, 01809 Heidenau (DE)
(74) Vertreter: Pfenning, Meinig & Partner GbR

(57) **Zusammenfassung**

Die Erfindung betrifft eine Vorrichtung zum Schockgefrieren von Blutplasma oder Lebensmitteln mit einem an einem Kälteerzeuger angeschlossenen Rohrsystem, bei der Transverbeutel für Blutplasma oder verpackte Lebensmittel in einer geschlossenen Kühlkammer im berührenden Kontakt mit der Kammerwandung der Kühlkammer stehen. Aufgabe der Erfindung ist es, auch kleinere Chargen von Blutplasma oder verpackten Lebensmitteln kühlen zu können und dabei den Energiebedarf relativ klein zu halten und Qualitätseinbußen zu vermeiden. Zur Lösung dieser Aufgabe wird das Rohrsystem, das an einem Kälteerzeuger angeschlossen ist, in mindestens einem Raum einer Kühlkammer angeordnet und dieser Raum mit einem Fluid oder Geel ausgefüllt.

## Beschreibung

Die Erfindung betrifft eine Vorrichtung nach dem Oberbegriff des Anspruchs 1. Sie kann unter Verwendung eines herkömmlichen Kälteerzeugers, der für den für das Schockgefrieren geeigneten Temperaturbereich geeignet ist, benutzt werden.

Blutplasma muß in möglichst kurzer Zeit auf Temperaturen von ca. - 30 °C gekühlt werden, um Qualitätseinbußen weitestgehend zu vermeiden. Ähnliches gilt auch für das Einfrieren von insbesondere frischen Lebensmitteln.

Beim Schockgefrieren von Blutplasma wird bisher entweder die herkömmliche, wenig effektive Luftkühlung in an sich bekannten abgeschlossenen Kühlgeräten durchgeführt.

Eine andere übliche Schockgefriereinrichtung verwendet flüssigen Stickstoff und das in flexible Transferbeutel eingeschlossene Blutplasma wird in geschlossenen Containern durch den flüssigen Stickstoff eingefroren. Der Einfriervorgang erfolgt dabei nicht definiert und reproduzierbar, eine Dokumentation des jeweiligen Temperaturregimes ist nicht möglich. Sie ist nur für größere Chargen geeignet, so daß das Einfrieren nicht vor Ort, d.h. unmittelbar am Ort der Blutabnahme, also erst entsprechend zeitverzögert erfolgen kann. Auch dies führt zu Qualitätseinbußen.

Aufgabe der Erfindung ist es, dass problemlos auch kleinere Chargen verarbeitet werden können, der Energiebedarf relativ klein gehalten und Qualtitätseinbußen vermieden werden.

Erfindungsgemäß wird diese Aufgabe mit den Merkmalen des Anspruchs 1 gelöst. Vorteilhafte Ausgestaltungsformen und Weiterbildungen der Erfindung ergeben sich mit den in den untergeordneten Ansprüchen genannten Merkmalen.

Hierzu erfolgt die Kühlung unmittelbar über einen direkten Kontakt der Transferbeutel bzw. Verpackung mit der Innenwandung einer Kühlkammer, die in dichter Packung in der Kühlkammer angeordnet werden sollen.

Die Kühlkammer sollte aus zwei Teilen bestehen, wobei ein Deckel als Oberteil zumindest angehoben werden kann, um gefrorenes Blutplasma bzw. Lebensmittel entnehmen und die Kühlkammer neu bestücken zu können.

Die Kühlkammerwandung kann aus einem Metall aber auch aus einem flexiblen Material, z.B. einer Folie bestehen. Eine flexible Innenwandung kann sich an die äußeren Konturen des zu gefrierenden Gutes anpassen und die Kontaktfläche ist demzufolge größer, als eine starre Wandung.

An einer metallischen Kammerwandung können orthogonal zu dieser oder schräg geneigt ausgerichtete, ebenfalls aus diesem Metall bestehende Trennstege ausgebildet sein, die die nutzbare Kontaktfläche für das Gefriergut vergrößern.

Unter der Kühlkammerwandung ist möglichst beidseitig oben und unten ein Rohrsystem angeordnet, durch das mit einem herkömmlichen Kühlaggregat auf Temperaturen bis ca. - 60 °C gekühltes Kältemittel geführt wird.

Dabei sollte über die Kammerwandflächen eine möglichst konstante Temperatur eingehalten werden. Dies wird zum einen mit einer möglichst gleichmäßigen Anordnung der Rohre und zusätzlich mit einem die Rohre des Rohrleitungssystems umgebenden Fluid, mit möglichst guter Wärmeleitfähigkeit und einer Erstarrungstemperatur die unterhalb - 60 °C liegt, erreicht. Ein entsprechendes Gel, das unter der Handelsbezeichnung Dow Therm von der Firma Dow Chemical erhältlich ist, hat sich als besonders geeignet erwiesen. So ist gesichert, dass über die Fläche der Kammerwandung nahezu kein Temperaturgradient auftritt und gleichmäßig gekühlt werden kann.

Das Fluid bzw. Gel füllt den gesamten Raum aus, so daß ein vollflächiger Kontakt zur Kammerwandung erreicht wird. Der mit dem Fluid oder Gel gefüllte Raum, in dem auch das Rohrsystem angeordnet ist, sollte bis auf die Kammerwand der Kühlkammer von einer Wärmeisolierung umgeben sein.

Nach dem Befüllen wird die Kühlkammer durch Absenken oder Zuklappen des ebenfalls gekühlten Deckels geschlossen, wobei während der Gefrierphase ein definierter, möglichst konstanter Anpreßdruck auf die das Plasma enthaltenden Transferbeutel bzw. Lebensmittelverpackungen ausgeübt und demzufolge ein möglichst großflächiger und inniger Kontakt zur Kammerwandung eingehalten wird. Die Druckkraft beim bzw. nach Verschließen der Kühlkammer kann pneumatisch, hydraulisch oder mittels eines Hebelgetriebes aufgebracht werden.

Die Temperatur wird mit mindestens einem Temperatursensor unmittelbar an der Kammerwandung gemessen und die Temperatursignale einer elektronischen Auswerteund ggf. Steuereinheit mit Speicher zugeführt, um eine dokumentierende Protokollierung zu ermöglichen.

Es können aber auch zwei oder auch mehr Temperatursensoren vorhanden sein. Dabei sollten ein Temperatursensor am Deckel und ein zweiter Temperatursensor am Boden der Kühlkammer angeordnet werden. Ein dritter bzw. auch vierter Temperatursensor kann zur Gewinnung von Referenzsignalen oder für Kontrollmessungen eingesetzt werden. Mit den Temperatursensoren kann in gemittelter Form die Temperatur des Fluids oder Gels gemessen werden.

Das Gefriergut kann vorab chargenweise in Aufnahmebehälter in möglichst dichter Packung eingestapelt werden. Die so vorbereiteten Aufnahmebehälter mit einer großen Grundfläche können dann in die Kühlkammer eingesetzt und nach Verschließen der Kühlkammer das Schockgefrieren durchgeführt werden. Die Grundfläche der Aufnahmebehälter ist dabei in möglichst vollflächiger Berührung mit der unteren Kammerwand. Werden mehrere Aufnahmebehälter verwendet, sollte das gesamte Kammervolumen ausgefüllt sein. Die Aufnahmebehälter sollten aus einem Material mit guter Wärmeleitfähigkeit bestehen.

Durch Umschalten des Kälteerzeugers oder von Ventilen zwischen Kälteerzeuger und Rohrsystem sollte eine Beheizung zum Abtauen der Vorrichtung vorhanden sein. Das Umschalten des Kälteerzeugers bedeutet, daß nicht mehr gekühltes Kühlmittel, sondern das entsprechend vom Verdichter erwärmte Fluid durch das Rohrleitungssystem geleitet wird.

Nachfolgend soll die Erfindung beispielhaft beschrieben werden.

Dabei zeigen:
- Figur 1: ein Rohrsystem, wie es in einer erfindungsgemäßen Vorrichtung eingesetzt werden kann und
- Figur 2: den schematischen Aufbau eines Beispiels einer erfindungsgemäßen Vorrichtung.

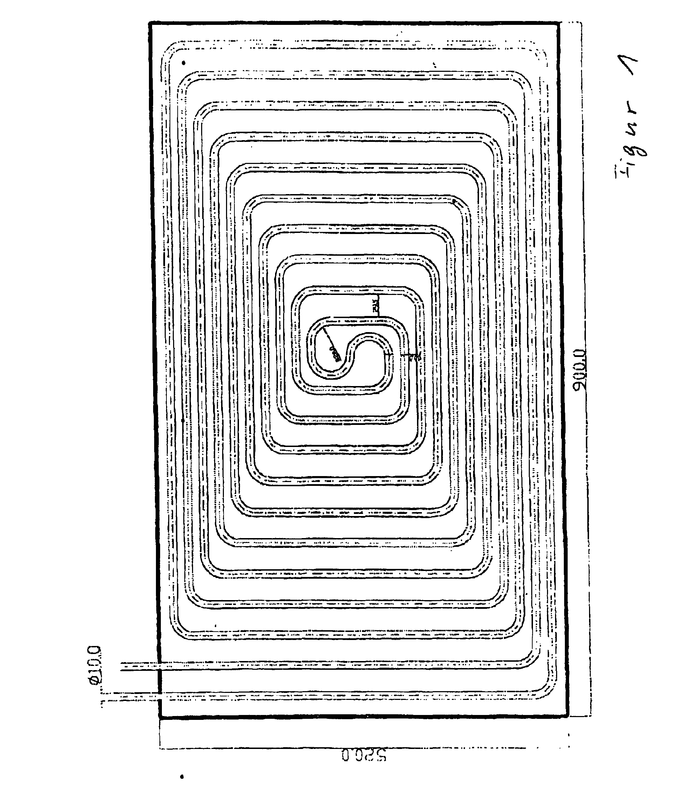

In der Figur 1 ist ein Rohrsystem gezeigt, wie es in einer erfindungsgemäßen Vorrichtung eingesetzt werden kann. Dabei können zwei solcher Rohrsysteme unterhalb der den Boden der Kühlkammer bildenden Kammerwandung und ein zweites Rohrsystem 1 im Deckel 3 einer erfindungsgemäßen Vorrichtung angeordnet werden. Für das/-die Rohrsystem(e) 1, la kann beispielsweise Kupferrohr mit konstantem Innendurchmesser, das wie gezeigt gebogen wird, eingesetzt werden und das Kältemittel gelangt vom Kälteerzeuger 6, 7 in das bzw. die Rohrsysteme 1, 1a, nimmt dabei Wärme des Fluids bzw. Gels auf und das in der Kühlkammer befindliche Blutplasma bzw. Lebensmittel können bei entsprechend tiefen Temperaturen schockgefroren werden.

Die verwendeten zwei Rohrsysteme 1 und 1a sollten möglichst gleich ausgebildet sein. Dies betrifft sowohl die Länge und demzufolge auch das innere Volumen, wie auch die Gestaltung, um möglichst symmetrische Temperaturverhältnisse einhalten zu können.

Die Räume, in denen die Rohrsysteme 1 und 1a sowie das entsprechend verwendete Fluid bzw. Gel aufgenommen sind, sollten außer im Bereich der Kammerwandung der Kühlkammer mit einer Wärmeisolierung 3a umschlossen sein.

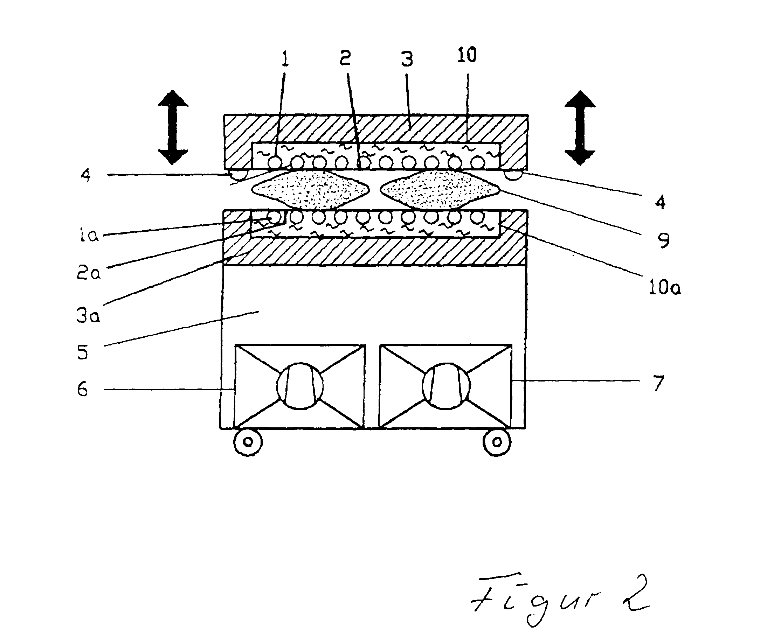

Das in Figur 2 gezeigte Beispiel einer erfindungsgemäßen Vorrichtung verwendet ebenfalls zwei Rohrsysteme 1 und 1a, wobei das Rohrsystem 1 im Deckel 3, der wie mit den Doppelpfeilen angedeutet, abgehoben und aufgesetzt werden kann, angeordnet ist.

Beide Rohrsysteme 1 und 1a sind von Fluid umgeben, wobei ein Beispiel für ein solches Fluid bereits im allgemeinen Teil der Beschreibung genannt worden ist.

Am äußeren Rand des Deckels 3 ist eine umlaufende Dichtung 4, aus einem elastischen Material vorhanden, wobei auch eine entsprechend ausgebildete zweite Dichtung im entsprechenden Bereich des Gehäuses 5 vorhanden sein kann.

In abgehobener Stellung des Deckels 3 können Transferbeutel 9 in die Kühlkammer eingelegt und nach Schließen des Deckels 3 befinden sich die Transferbeutel 9 in unmittelbarem Kontakt mit der Kammerwandung 2 und 2a.

Nach Einschalten, der bei diesem Beispiel zwei Kälteerzeuger 6 und 7, gelangt komprimiertes Kältemittel über nicht dargestellte Zuleitungen zu jeweils einem der beiden Rohrsysteme 1 und 1a. Sind in der Zuleitung, möglichst unmittelbar am Einlauf in die Rohrsysteme 1 bzw. 1a ebenfalls nicht dargestellte Drosselventile vorhanden, so können die Rohrsysteme 1 und 1a Verdampfer der Kälteerzeuger bilden und über ebenfalls nicht dargestellte Ableitungen das verdampfte Kältemittel in die Kondensatoren der Kälteerzeuger 6 und 7 zurückgeführt, erneut komprimiert und zur Kühlung genutzt werden kann. In diesem Fall kann die zugeleitete Energie zur Kühlung besonders effektiv genutzt werden.

Die Teile 10 und 10a sind bei diesem Beispiel aus einem Edelstahl gebildet, was auch auf die die Kammerwandung 2 und 2a bildenden Teile zutrifft.

Die Kälteerzeuger 6, 7 können mittels einer elektronischen Auswerte- und Steuerelektronik und Temperatursensoren geregelt werden, wobei auch eine Protokollierung des Zeit-Temperaturverlaufes während des Schockgefrierens möglich sein sollte. Ein solches Protokoll kann dann beispielsweise in Form eines Strichcodes ausgegeben und die gefrorenen Transferbeutel bzw. gefrorene Lebensmittelverpackungen entsprechend markiert werden.

## Patentansprüche

1. Vorrichtung zum Schockgefrieren von Blutplasma oder Lebensmitteln mit einem an einen Kälteerzeuger angeschlossenen Rohrsystem, bei der Transferbeutel (9) für Blutplasma oder verpackte Lebensmittel in einer geschlossenen Kühlkammer im berührenden Kontakt mit der Kammerwandung (2, 2a) der Kühlkammer stehen,
**dadurch gekennzeichnet, dass** das Rohrsystem (1, 1a) in mindestens einem Raum einer Kühlkammer angeordnet und der Raum mit einem Fluid oder Gel ausgefüllt ist.

2. Vorrichtung nach Anspruch 1,
**dadurch gekennzeichnet, dass** ein Rohrsystem (1) im Deckel (3) und ein zweites Rohrsystem (1a) unterhalb des Bodens der Kühlkammer angeordnet sind.

3. Vorrichtung nach Anspruch 1 oder 2,
**dadurch gekennzeichnet, dass** die beiden Rohrsysteme (1 und 1a) gleich dimensioniert und ausgebildet sind.

4. Vorrichtung nach einem der Ansprüche 1 bis 3,
**dadurch gekennzeichnet, dass** die beiden Rohrsysteme (1 und 1a) an jeweils einem Kälteerzeuger (6 und 7) angeschlossen sind.

5. Vorrichtung nach einem der Ansprüche 1 bis 4,
**dadurch gekennzeichnet, dass** die Rohrsysteme (1, 1a) den Verdampfer eines Kälteerzeugers bilden.

6. Vorrichtung nach eine der Ansprüche 1 bis 5,
**dadurch gekennzeichnet, dass** die Kammerwandung (2, 2a) aus einem Metall besteht.

7. Vorrichtung nach einem der Ansprüche 1 bis 5,
**dadurch gekennzeichnet, dass** die Kammerwandung (2, 2a) aus einer Folie besteht.

8. Vorrichtung nach einem der Ansprüche 1 bis 7,
**dadurch gekennzeichnet, dass** an der Kammerwandung (2, 2a) Trennstege ausgebildet sind.

9. Vorrichtung nach einem der Ansprüche 1 bis 8,
**dadurch gekennzeichnet, dass** das Fluid oder Gel eine Erstarrungstemperatur unterhalb - 60 °C hat.

10. Vorrichtung nach einem der Ansprüche 1 bis 9,
**dadurch gekennzeichnet, dass** mindestens ein mit einer elektronischen Auswerte- und Steuerelektronik verbundener Temperatursensor an der Kammerwandung angeordnet ist.

11. Vorrichtung nach Anspruch 10,
**dadurch gekennzeichnet, dass** ein Temperatursensor im Deckel (3) und ein zweiter Temperatursensor am Boden der Kühlkammer angeordnet sind.

12. Vorrichtung nach einem der Ansprüche 1 bis 11,
**dadurch gekennzeichnet, dass** ein Deckel (3) einer zweiteiligen Kühlkammer druckkraftbeaufschlagt geschlossen gehalten ist.

13. Vorrichtung nach einem der Ansprüche 1 bis 12,
**dadurch gekennzeichnet, dass** Transferbeutel (9) oder verpackte Lebensmittel in in die Kühlkammer einsetzbare Aufnahmebehälter eingestapelt sind.

14. Vorrichtung nach einem der Ansprüche 1 bis 15,
**dadurch gekennzeichnet, dass** das Rohrsystem (1, 1a) über umschaltbare Ventile an den das gekühlte Kältemittel und den das vom Verdichter erwärmte Fluid führenden Teil des Kälteerzeugers (6, 7) angeschlossen ist.
